# EUROPÄISCHE PATENTSCHRIFT

(11) **EP 3 794 173 B1**
(45) Veröffentlichungstag und Bekanntmachung des Hinweises auf die Patenterteilung: **07.06.2023**
(21) Anmeldenummer: 19717263.8
(22) Anmeldetag: 08.04.2019
(51) Int. Cl.: D05B 19/16, D05B 21/00

(54) **VERFAHREN ZUR POSITIONSREGELUNG EINES NAHTVERLAUFS RELATIV ZU STRUKTUREN EINES NÄHGUTS**
METHOD FOR CONTROLLING THE POSITION OF A SEAM PROFILE RELATIVE TO STRUCTURES OF A SEWING MATERIAL
PROCÉDÉ DE RÉGULATION DE POSITION D'UNE COUTURE PAR RAPPORT À DES STRUCTURES D'UN ARTICLE À COUDRE

(30) Priorität: 18.05.2018 DE 102018207931
(43) Veröffentlichungstag der Anmeldung: 24.03.2021
(73) Patentinhaber: Pfaff Industriesysteme und Maschinen GmbH, 67661 Kaiserslautern (DE)
(72) Erfinder: JAEGER, Guido, 64625 Bensheim (DE); BECKER, Berthold, 64668 Rimbach (DE)
(74) Vertreter: Rau, Schneck & Hübner Patentanwälte Rechtsanwälte PartGmbB
(86) Internationale Anmeldenummer: PCT/EP2019/058739
(87) Internationale Veröffentlichungsnummer: WO 2019/219296

(56) Entgegenhaltungen:
- WO-A1-2008/056903
- DE-A1-102015 116 112
- DE-C2- 3 535 644
- US-A1- 2015 128 835
- US-A1- 2016 215 423

## Beschreibung

Die Erfindung betrifft ein Verfahren zur Positionsregelung eines Nahtverlaufs relativ zu Strukturen eines Nähguts und eine Nähvorrichtung zur Abarbeitung eines derartigen Verfahrens.

Aus den Druckschriften EP 1 997 945 A1, EP 0 971 061 A1, US 2012/022602 A1 und GB 2 240 193 A1 sind Nähvorrichtungen mit einer Kamera zum Erfassen eines Nähguts bekannt, wobei auf Basis der erfassten Bilddaten ein zu nähender Nahtverlauf bestimmt wird.

Es hat sich gezeigt, dass insbesondere bei einem lagekritischen Nähgut mit einer Struktur, beispielsweise Leder mit Lochmuster, ein Aufbringen der Struktur, also z.B. des Lochmusters, aufgrund inhomogener Eigenschaften des Nähguts nicht ohne weiteres reproduzierbar auf dem Nähgut anordenbar ist. Mit dem aus dem Stand der Technik bekannten Vorrichtungen und Verfahren ist ein reproduzierbares Nähen einer Naht relativ zu einer Struktur jedenfalls bei hohen Genauigkeitsanforderungen, was die Lage der Naht relativ zu der Struktur angeht, nicht möglich.

Die DE 35 35 644 C2 offenbart ein Verfahren zum Steppen entlang der Konturen von auf flächigen elastischen Stoffen aufgebrachten Mustern sowie eine Vorrichtung zur Durchführung des Verfahrens. Die DE 689 07 167 T2 offenbart ein Verfahren sowie eine Vorrichtung zum Zuführen von blattförmigem Material. Die DE 102 36 581 A1 offenbart ein Verfahren zum Kompensieren von Musterverzerrungen auf flächigem Arbeitsmaterial, das auf einer Auslagefläche ausgebreitet ist. Die US 5,205,232 offenbart eine Vorrichtung zum Kantenerkennen und Nähen. Die US 2009/0188414 A1 offenbart eine Nähmaschine sowie ein Steuerungsprogramm für eine Nähmaschine. Die DE 42 03 558 A1 offenbart eine Nähgutpositions-Korrekturvorrichtung. Die DE 42 05 070 A1 offenbart ein Verfahren zum Positionieren und Vorschieben eines Nähgutes. Die DE 10 2015 116 112 A1 offenbart eine Formerkennungseinrichtung sowie eine Nähmaschine. Die US 2016/215 423 zeigt ein Stickmuster-Platzierungssystem, ein Stickmuster-Platziergerät sowie ein Verfahren zum Platzieren des Stickmusters für das Stickmuster-Platziersystem und eine Nähmaschine. Die WO 2008/056 903 A1 zeigt ein Verfahren und eine Vorrichtung zur Korrektur von gesteppten Mustern einer Einkopf-Quiltmaschine. Die US 2015/128 835 A1 zeigt eine Nähmaschine.

Eine Aufgabe der vorliegenden Erfindung besteht darin, ein Verfahren bereitzustellen, mit dem eine auch bei hohen Genauigkeitsanforderungen ausreichend exakte Positionsregelung eines Nahtverlaufs relativ zu Strukturen eines Nähguts ermöglicht wird. Diese Aufgabe wird mit den Merkmalen des Anspruchs 1 gelöst.

Der Erfindung liegt die Erkenntnis zugrunde, dass ein Nähprogramm derart angepasst werden kann, dass eine Positionsregelung eines Nahtverlaufs relativ zu der Struktur eines Nähguts auf Basis des von Vergleichsdaten einer Struktur eines Referenz-Nähguts und eines Arbeits-Nähguts erfolgt.

Bei einem Verfahren zur Positionsregelung eines Nahtverlaufs relativ zu Strukturen eines Nähguts werden zunächst Referenzpositionen der Nähgut-Strukturen anhand eines diese Strukturen aufweisenden Referenz-Nähguts erfasst. Auf Basis der erfassten Referenzpositionen werden Referenzstruktur-Datensätze anhand der erfassten Struktur-Referenzpositionen erzeugt. Nach dem Erzeugen der Referenzstruktur-Datensätze wird ein Arbeits-Nähgut mit einem Nähprogramm genäht, wobei vor dem Nähen des Arbeits-Nähguts ein Nähprogramm eingelesen bzw. ausgewählt werden kann und wobei vor dem Nähen des Arbeits-Nähguts folgende Schritte zur Vorbereitung des Nähprogramms abgearbeitet werden:
- Erfassen von Arbeitspositionen von Nähgut-Strukturen des Arbeits-Nähguts, die den Nähgut-Strukturen des Referenz-Nähguts entsprechen,
- Erzeugen von Arbeitsstruktur-Datensätzen anhand der erfassten Struktur-Arbeitspositionen,
- Vergleichen der Arbeitspositionen mit den Referenzpositionen anhand eines Vergleichs zwischen den Referenzstruktur-Datensätzen mit den Arbeitsstruktur-Datensätzen,
- Anpassen von Parameterdaten des Nähprogramms anhand der beim Vergleich erfassten Abweichungen zwischen den Referenzstruktur-Datensätzen und den Arbeitsstruktur-Datensätzen.

Anschließend erfolgt das Nähen des Arbeits-Nähguts mit dem angepassten Nähprogramm.

Das Referenz-Nähgut ist nicht gleich dem Arbeits-Nähgut. Beim Referenz-Nähgut einerseits und beim jeweiligen Arbeits-Nähgut andererseits handelt es sich also um unterschiedliche Stücke von Nähgut.

Beispiele für die Strukturen des Nähguts sind Perforationen im Nähgut oder Musterungen bzw. farbige Muster, insbesondere ein unregelmäßiges Muster, im Nähgut. Vorteilhafterweise können die Positionen von mehreren aufeinander folgenden Perforationen und/oder Länge bzw. Richtung eine Abfolge von Perforationen oder auch ein Winkel zwischen zwei Abschnitten einer Abfolge von Perforationen erfasst und bearbeitet werden. Es kann ein Verlauf einer Musterung oder eines farbigen Musters im Nähgut erkannt und an diesen der Nahtverlauf angepasst werden.

Es wurde erkannt, dass ein Regelverfahren, bei dem initial erzeugte Referenzstruktur-Datensätze mit anhand erfasster Struktur-Arbeitspositionen erzeugten Arbeitsstruktur-Datensätzen des aktuell zu nähenden Nähguts verglichen werden, den Datenverarbeitungsaufwand eines entsprechenden Positionsregelverfahrens auch bei hoher geforderter Genauigkeit und für eine Serienproduktion erforderlichen Geschwindigkeitsanforderungen handhabbar hält. Die Arbeitsstruktur-Datensätze können angepasst an die jeweils im Nähgut vorliegenden Strukturen angepasst erzeugt werden. Hierbei können Charakteristika der Struktur, beispielsweise die Anordnung vorliegender Nähgut-Perforationen oder Musterspezifika berücksichtigt werden.

Mit einem Verfahren nach Anspruch 2 kann die Anpassung des Nähprogramms weiter verbessert werden. Die Positionsregelung des Nahtverlaufs wird weiter verbessert. Das Nahtbild wird optimiert. Es kann genau eine Abweichung der Abweichungstypen "Verlagerung längs erster Nähkoordinate", "Verlagerung längs zweiter Nähkoordinate", "Größenunterschied Struktur-Datensätze", "Winkelabweichung" oder "Größenunterschied Struktur-Datensatz-Erstreckung" genutzt werden. Alternativ ist es möglich, mehr als einen dieser Abweichungstypen, zum Beispiel eine Kombination von zwei dieser Abweichungstypen, von drei dieser Abweichungstypen, von vier dieser Abweichungstypen oder von allen genannten Abweichungstypen genutzt werden.

Die im Anspruch 2 genannten Struktur-Datensatz-Abweichungen haben sich in der Praxis bei typischerweise auf Nähgut vorliegenden Strukturen bewährt. Eine Berücksichtigung von Verlagerungs-Abweichungen längs mindestens einer Nähkoordinate stellt sicher, dass kein unerwünschter Offset des Nahtverlaufs beim Vergleich zwischen dem Referenz-Nähgut und dem aktuellen Arbeits-Nähgut vorliegt. Die Berücksichtigung eines Grö-βenunterschieds kann beispielsweise sicherstellen, dass verschiedene Abbildungsmaßstäbe bei der Erfassung einerseits des Referenz-Nähguts und andererseits bei der Erfassung des Arbeits-Nähguts keine unerwünschte Rolle bei der Positionsregelung spielen. Entsprechendes gilt bei Berücksichtigung einer Winkelabweichung bzw. eines Größenunterschiedes zwischen Start- und Endpunkt eines Datensatzes.

Das Einlegen des Nähguts in einen Nähgutrahmen nach Anspruch 3 stellt eine reproduzierbare Positionierung des Nähguts sicher.

Eine weitere Aufgabe der vorliegenden Erfindung besteht darin, eine Nähvorrichtung zur Durchführung des Verfahrens bereitzustellen.

Die Aufgabe wird mit den Merkmalen des Anspruchs 4 gelöst.

Mit dem Kamerasystem wird gewährleistet, dass ein lagekritisches Nähgut mit einer Struktur lagerichtig so erfasst wird, dass eine Naht längs eines vorbestimmten Weges relativ zu einer Struktur eines Nähguts genäht werden kann. Bei dem Kamerasystem kann es sich um ein Stereo-Kamerasystem handeln. Das Kamerasystem kann so ausgeführt sein, dass eine Überprüfung der Abweichungstypen während des Nähvorgangs in Echtzeit möglich ist.

Ein Ausführungsbeispiel soll anhand der Figuren näher erläutert werden. In dieser zeigen:
- Fig. 1: eine unter Weglassung einzelner Komponenten angedeutete Nähvorrichtung,
- Fig. 2: eine an Linie II-II geschnittene Darstellung der Nähvorrichtung nach Fig. 1,
- Fig. 3: eine Teil-Ansicht eines Arbeits-Nähguts mit einer Arbeitsstruktur und
- Fig. 4: ein Ablaufschema eines Verfahrens zur Positionsregelung eines Nahtverlaufs.

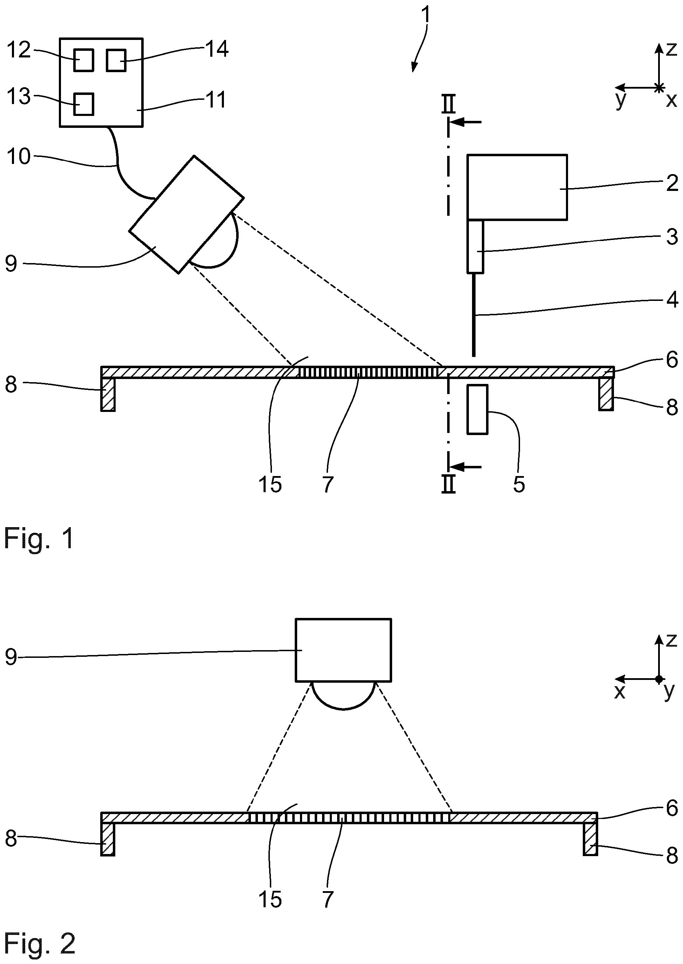

Die Figuren 1 und 2 zeigen schematisch eine Nähvorrichtung 1. Eine derartige Nähvorrichtung 1 kann beispielsweise eine CNC-Nähanlage, insbesondere eine CNC-Nähanlage KL 110 der Anmelderin, sein.

Zur Erleichterung von Lagebeziehungen ist in den Figuren 1 bis 3 jeweils ein kartesisches xyz-Koordinatensystem angegeben. Die x-Achse steht senkrecht auf der Zeichenebene der Figur 1 und läuft in diese hinein. Die y-Richtung verläuft in der Figur 1 nach links und die z-Richtung verläuft in der Figur 1 nach oben.

Wie in Figur 1 dargestellt, weist die Nähvorrichtung 1 einen Nähkopf 2 einer Nähmaschine auf. Letzterer umfasst unter anderem eine Nadelstange 3 mit einer Nähnadel 4, wobei der Nähkopf 2 um die z-Achse drehbar gelagert ist. Koaxial und entgegen der z-Achse ist ein schematisch angedeuteter Greifer 5 angeordnet.

Zwischen der Nähnadel 4 und dem Greifer 5 befindet sich ein Nähgut 6 mit einer Struktur 7. Das Nähgut 6 ist auf einen Nähgut-Rahmen 8 gespannt. Der Nähgut-Rahmen 8 kann in der x-y-Ebene relativ zum Nähkopf 2 eine Bewegung ausführen. Aufgrund der Drehbarkeit des Nähkopfes 2 und der Bewegbarkeit des Nähgut-Rahmens 8 in der x-y-Ebene ergeben sich drei Freiheitsgrade, sodass ein Nahtverlauf in alle Nährichtungen auf der x-y-Ebene realisiert werden kann.

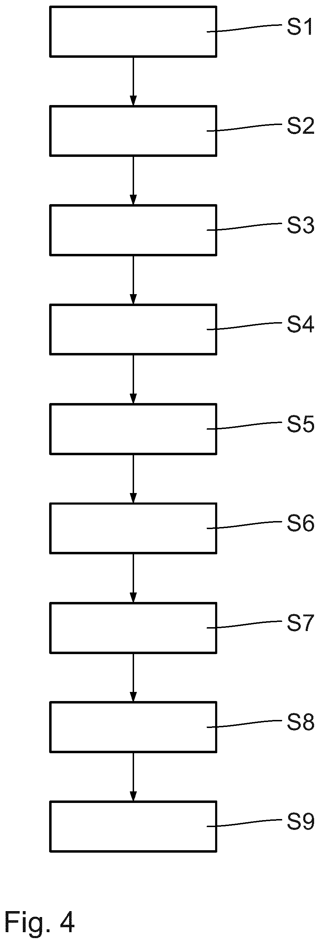

Das Nähgut 6 kann sowohl ein Referenz-Nähgut als auch ein Arbeits-Nähgut sein. Ein Referenz-Nähgut ist ein Nähgut mit einer Struktur, wobei die Struktur auf einem eng tolerierten, optimierten Material aufgebracht ist. Auf Basis des Referenz-Nähguts wird ein Nähprogramm erstellt. Dies wird nachfolgend noch anhand der Figur 4 im Detail erläutert. Ein Arbeits-Nähgut ist das zu nähende Nähgut mit einer Struktur, die der Struktur des Referenz-Nähguts entspricht, wobei mögliche Ungleichmäßigkeiten vorhanden sein können. Diese Ungleichmäßigkeiten entstehen in der Regel durch das Aufbringen einer Struktur wie beispielsweise einer Perforation, da sich beim Aufbringen der Struktur das Material beispielsweise durch Streckung und/oder Stauchung verzieht. Hierdurch ergeben sich Lageänderungen der Struktur des Arbeits-Nähguts gegenüber der Struktur des Referenz-Nähguts. Die Ungleichmäßigkeiten können auch das Ergebnis einer veränderten Lage des Arbeits-Nähguts im Nähgut-Rahmen gegenüber dem Referenz-Nähgut im Nähgut-Rahmen sein. Infolge der Ungleichmäßigkeiten ist es erforderlich, das Nähprogramm anzupassen. Auch dies wird nachfolgend noch anhand der Figur 4 im Detail erläutert.

Ausgehend von der Nähnadel 4 längs der y-Achse verlagert ist ein Kamerasystem 9 vorgesehen, welches in Signalverbindung 10 mit einer in einer Rechnereinheit 11 vorhandenen Steuerung 12 der Nähvorrichtung 1, insbesondere einer CNC-Steuerung, steht. Insbesondere kann das Kamerasystem 9 zwei nicht näher dargestellte Kameras aufweisen. Das Kamerasystem 9 kann als Stereo-Kamerasystem oder als intelligente Kamera ausgeführt sein.

In der Rechnereinheit 11 ist ein Speicherelement 13, insbesondere ein RAM-Speicher, vorgesehen, in dem mindestens ein Nähprogramm abgespeichert ist. Zudem befindet sich auf der Rechnereinheit 11 oder im Kamerasystem 9 selbst eine Auswertungs-Software 14 zur Auswertung von Bilder, insbesondere von erzeugten Referenzbildern und Arbeitsbildern und zur Ermittlung von Referenzstruktur-Datensätzen und Arbeitsstruktur-Datensätzen. Die Auswertungs-Software 14 tauscht Parameter und Daten mit dem Nähprogramm aus, welches beim Nähen einer Naht mit der Nähvorrichtung 1 abgearbeitet wird. Eine Kommunikation des Kamerasystems 9 mit der Steuerung 12 kann z.B. über einen USB (Universal Serial Bus)-Standard durch Lesen und Schreiben von Dateien auf einem Datenträger oder über eine TCP-(Transmission Control Protocol)-Verbindung erfolgen.

Die Steuerung 12 teilt der Auswertungs-Software 14 mit, welches Nähprogramm angepasst werden soll. Das Kamerasystem 9 kann der Steuerung 12 die Betriebsbereitschaft, Fehler, Erfolg und dergleichen mitteilen. Auf deren Basis kann die Steuerung 12 die Auswertung des Kamerasystems 9 starten. Nach erfolgter Auswertung übermittelt das Kamerasystem 9 Anpassungsparameter für das ausgewählte Nähprogramm an die Steuerung 12 durch Manipulation von Parameterwerten beispielsweise zum Ausgleich der Verlagerung einzelner Punkte durch Streckung, Dehnung und/oder Stauchung des Nähguts 6. Mit diesem Vorgehen wird eine automatische Anpassung der Parameterwerte zur Anpassung des Nähprogramms bereitgestellt. Eine Anpassung erfolgt für jeden Nähvorgang auf Basis der Auswertung des Kamerasystems 9. Vor jedem Nähvorgang wird mit dem Kamerasystem 9 ein Bildbereich 15 des ungenähten Nähguts 6 erfasst, aus dem ein auszuwertendes Bild erzeugt wird. Je nach gewünschtem Nahtverlauf relativ zur Struktur 7 kann der Bildbereich 15 das vollständige Nähgut 6 oder zumindest Teilbereiche von dem Nähgut 6 erfassen. Entsprechend kann dann ein Bild von dem gesamten Nähgut 6 oder ein Bild von einem Teilbereich des Nähguts 6 erzeugt werden.

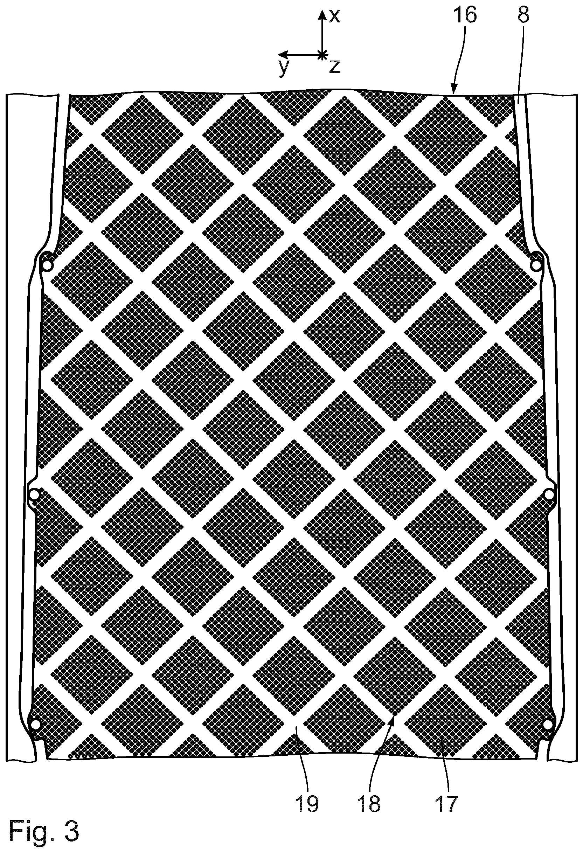

Figur 3 zeigt eine Teil-Ansicht eines auf dem Nähgut-Rahmen 8 gespanntes ungenähtes Arbeits-Nähgut 16 mit Perforationslöchern 17 in Form von beabstandeten, auf der Spitze stehenden Quadraten 18 auf. Zwischen den auf der Spitze stehenden Quadraten 18 befinden sich Zwischenräume 19, in denen ein Nahtverlauf angebracht werden soll, wobei der Nahtverlauf möglichst mittig zwischen den auf der Spitze stehenden Quadraten 18 sein soll. Aus der Figur 3 wird ersichtlich, dass die längs der y-Achse liegenden, auf der Spitze stehenden Quadrate 18 entlang der x-Achse verschoben sind. Gleichzeitig sind auch die längs der x-Achse liegenden, auf der Spitze stehenden Quadrate 18 entlang der y-Achse verschoben.

Vor dem Nähen wird vom Kamerasystem 9 ein Bild vom Arbeits-Nähgut 16 erstellt. Dieses Bild wird ein Arbeitsbild. Aus diesem werden Arbeitsstruktur-Datensätze erzeugt, die mit aus einem bereits erstellten nicht dargestellten Referenzbild erzeugten Referenzstruktur-Datensätzen verglichen werden. Im vorliegenden Fall wird das gesamte Nähgut, also sowohl das gesamte Referenz-Nähgut als auch das gesamte Arbeits-Nähgut, erfasst, um entsprechend das Referenzbild und auch das Arbeitsbild zu erzeugen. Nachfolgend wird ein Verfahren zur Positionsregelung eines Nahtverlaufs relativ zu Strukturen 7 eines Nähguts 6 anhand von Figur 4 beschrieben.

Zunächst werden in einem Schritt S₁ Referenzpositionen der Nähgut-Strukturen anhand eines diese Strukturen aufweisendes Referenz-Nähgut erfasst. Hierzu wird zunächst vom Kamerasystem 9 ein Referenzbild vom Referenz-Nähgut erzeugt. In diesem Fall wird das gesamte Referenz-Nähgut erfasst. Anschließend wird das Referenzbild in das Kamerasystem 9 geladen und die Erkennung der Nähgut-Strukturen 17, wie beispielsweise der Perforationen, wird gestartet.

Zum Erfassen der Struktur-Referenzpositionen werden im Kamerasystem 9 Messlinien angelegt. Die Messlinien werden im Referenzbild durch Markieren einzelner Perforationslöcher angelegt. Mittels der Messlinien können die Strukturen erfasst werden. Dies erfolgt insbesondere durch Erfassen von Start-und Endpunkt in x-Richtung, Start-und Endpunkt in y-Richtung und/oder von einem Winkel einer Messlinie. Insgesamt können z.B. 99 Messlinien erzeugt werden, wobei jede Messlinie mit verschiedenen einzelnen Messwerten, also Parametern, angegeben werden kann.

Anschließend werden im Schritt S₂ Referenzstruktur-Datensätze anhand der erfassten Struktur-Referenzpositionen erzeugt.

Hierzu werden die einzelnen Messlinien in Form von Pixel- oder skalierten Koordinatenlisten und mit Referenz auf ein Nähprogramm abgelegt. Hierdurch wird ermöglicht, eine Messlinie im auszuwertenden Bild wiederzufinden und die Positionsänderung der einzelnen Perforationslöcher gegen die Referenz auszuwerten. Für jeden Parameter jeder Messlinie wird eine Kennung festgelegt, die zur Kommunikation mit der Steuerung 12 dient.

Danach werden im Schritt S₃ Schritte zur Vorbereitung des Nähprogramms eingeleitet.

Im Schritt S₄ teilt die Steuerung 12 dem Kamerasystem 9 mit, welches Nähprogramm korrigiert werden soll. Das Kamerasystem 9 meldet folgende Zustände an die Steuerung 12, nämlich Betriebsbereitschaft, Auswertung, Erfolg und Fehler. Die Steuerung 12 wiederum meldet folgenden Zustand an das Kamerasystem 9, nämlich Kameraauswertung starten.

Im darauf folgenden Schritt S₅ erfolgt ein Erfassen von Arbeitspositionen von Nähgut-Strukturen 18 des Arbeit-Nähguts 16, die den Nähgut-Strukturen des Referenz-Nähguts entsprechen. Hierzu wird vom Kamerasystem 9 ein Bild von dem ungenähten Arbeits-Nähgut 16 erzeugt. Dieses Bild wird das Arbeitsbild.

Zum Erfassen der Arbeitspositionen werden Messlinien im Kamerasystem 9 erzeugt. Hierzu wird zunächst das Arbeitsbild in das Kamerasystem 9 geladen und die Erkennung der Perforationslöcher 17 im Arbeits-Nähgut 16 gestartet. Anschließend können im Arbeitsbild durch Markieren einzelner Perforationslöcher 17 automatisiert Messlinien angelegt werden. Hierbei können die Messlinien-Daten der Referenzbild-Aufnahme genutzt werden. Das Anlegen der Messlinien kann analog zum Schritt S₁ erfolgen.

Anschließend werden im Schritt Se Arbeitsstruktur-Datensätze anhand der erfassten Struktur-Arbeitspositionen erzeugt. Dies erfolgt analog zum Schritt S₂ und auf Basis der für das entsprechende Nähprogramm abgelegten Referenzstruktur-Datensätze.

Anschließend erfolgt im Schritt S₇ ein Vergleichen der Arbeitspositionen mit den Referenzpositionen anhand eines Vergleichs zwischen den Referenzstruktur-Datensätzen mit den Arbeitsstruktur-Datensätzen. Aus dem Vergleich ergeben sich entsprechende Abweichungs-Parameter auf Basis derer das Nähprogramm angepasst werden kann.

Die Anpassung von Parameterdaten des Nähprogramms anhand der beim Vergleich erfassten Abweichungen zwischen den Referenzstruktur-Datensätzen und den Arbeitsstruktur-Datensätzen erfolgt im Schritt S₈.

Eine Abweichung zwischen den Referenzstruktur-Datensätzen und den Arbeitsstruktur-Datensätzen wird aus zumindest eines Abweichungstyps aus der folgenden Gruppe berücksichtigt:
- Verlagerung des Arbeits-Nähguts relativ zum Referenz-Nähguts längs einer Nähkoordinate,
- Verlagerung des Arbeits-Nähguts relativ zum Referenz-Nähguts längs einer zweiten Nähkoordinate, die senkrecht auf der ersten Nähkoordinate steht,
- Größenunterschied eines Arbeitsstruktur-Datensatzes relativ zum Referenzstruktur-Datensatzes längs mindestens einer der Nähkoordinaten,
- Winkelabweichung einer Erstreckung der Arbeitsstruktur-Datensätzen relativ zu den Referenzstruktur-Datensätzen längs einer Nähkoordinate, längs einer Linienverbindung eines Startpunktes und eines Endpunktes des jeweiligen Datensatzes und
- Größenunterschied einer Erstreckung der Arbeitsstruktur-Datensätzen relativ zu den Referenzstruktur-Datensätzen längs einer Nähkoordinate längs einer Linienverbindung eines Startpunktes und eines Endpunktes des jeweiligen Datensatzes.

Die Anpassung des Nähprogramms erfolgt über das Kamerasystem 9. Hierbei verändert das Kamerasystem 9 das ausgewählte Nähprogramm durch Manipulation der Parameterwerte im Nähprogramm. Dies erfolgt anhand mindestens eines der oben genannten Abweichungstypen oder anhand einer Kombination von mindestens zweien der oben genannten abweichungstypen. Das Nähprogramm wird z.B. auf der gemeinsam von dem Kamerasystem 9 und der Steuerung 12 genutzten Rechnereinheit 11 abgelegt. Alternativ kann das Kamerasystem 9 auch die Parameterwerte direkt an die Steuerung 12 übermitteln, die dann Einfluss auf das aktuell ausgewählte Nähprogramm nimmt. Mit diesem Vorgehen wird eine Korrektur für jeden Nähvorgang auf Basis der Kamera-Auswertung ermöglicht.

Hierzu müssen im Nähprogramm die zu verwendenden Parameter mit einer Zuweisung eingetragen werden. Je nach Bewertung der ersten Messergebnisse mit unterschiedlich tolerierten Materialproben, können nun die definierten Parameter im Nähprogramm verrechnet werden. Dazu dienen standardmäßige Befehle, die von der Steuerung 12 zur Verfügung gestellt werden. Die Befehle können dazu führen, dass das gesamte Nähprogramm und/oder einzelne Nahtverläufe und/oder einzelne Start- und Endpunkte von Nähten verschoben werden. Zudem können die Befehle dazu führen, dass ein Strecken oder Stauchen des Nähguts erfolgt. Zudem können mit den Befehlen Winkelfehler ausgeglichen werden. Die entsprechenden Korrekturbefehle werden im Nähprogramm so eingegeben, dass eine Veränderung des Referenz-Nähprogramms erfolgt.

Anschließend erfolgt im Schritt S₉ ein Nähen des Arbeits-Nähguts 16 mit dem angepassten Nähprogramm. Das Nähen erfolgt nun längs eines exakt vorbestimmten Weges relativ zu der Struktur 18 des Arbeits-Nähguts 16.

## Patentansprüche

1. Verfahren zur Positionsregelung eines Nahtverlaufs relativ zu Strukturen eines Nähguts mit folgenden Schritten:
- Erfassen von Referenzpositionen der Nähgut-Strukturen anhand eines diese Strukturen aufweisenden Referenz-Nähguts, wobei die Nähgut-Strukturen Perforationen oder Musterungen bzw. farbige Muster, insbesondere ein unregelmäßiges Muster, im Nähgut sind, welche auf einem eng tolerierten, optimierten Material aufgebracht sind, wobei von einem Kamerasystem (9) ein Referenzbild vom Referenz-Nähgut erzeugt wird und das Referenzbild anschließend in das Kamerasystem geladen und die Erkennung der Nähgut-Strukturen gestartet wird,
- Erzeugen von Referenzstruktur-Datensätzen für ein Nähprogramm anhand der erfassten Referenzpositionen der Nähgut-Strukturen
- Nach dem Erzeugen der Referenzstruktur-Datensätze: Nähen eines Arbeits-Nähguts (16) mit dem Nähprogramm,
- wobei vor dem Nähen des Arbeits-Nähguts folgende Schritte zur Vorbereitung des Nähprogramms abgearbeitet werden:
-- Erfassen von Arbeitspositionen von Nähgut-Strukturen (17) des Arbeits-Nähguts (16), die den Nähgut-Strukturen des Referenz-Nähguts entsprechen, wobei mögliche Ungleichmäßigkeiten vorhanden sein können, und wobei vom Kamerasystem (9) ein Arbeitsbild von dem ungenähten Arbeits-Nähgut (16) erzeugt wird,
-- Erzeugen von Arbeitsstruktur-Datensätzen anhand der erfassten Arbeitspositionen von Nähgut-Strukturen,
-- Vergleichen der Arbeitspositionen mit den Referenzpositionen anhand eines Vergleichs zwischen den Referenzstruktur-Datensätzen mit den Arbeitsstruktur-Datensätzen,
- Anpassen von Parameterdaten des Nähprogramms anhand der beim Vergleichen erfassten Abweichungen zwischen den Referenzstruktur-Datensätzen und den Arbeitsstruktur-Datensätzen, wobei die Anpassung des Nähprogramms über das Kamerasystem (9) erfolgt, wobei das Kamerasystem das Nähprogramm durch Manipulation der Parameterwerte im Nähprogramm verändert, und
- Nähen des Arbeits-Nähguts mit dem angepassten Nähprogramm.

2. Verfahren nach Anspruch 1, **dadurch gekennzeichnet, dass** mindestens eine Abweichung zwischen den Referenzstruktur-Datensätzen und den Arbeitsstruktur-Datensätzen aus folgender Gruppe berücksichtigt wird
- Verlagerung des Arbeits-Nähguts relativ zum Referenz-Nähguts längs einer ersten Nähkoordinate,
- Verlagerung des Arbeits-Nähguts relativ zum Referenz-Nähguts längs einer zweiten Nähkoordinate, die senkrecht auf der ersten Nähkoordinate steht,
- Größenunterschied der Arbeitsstruktur-Datensätze relativ zu den Referenzstruktur-Datensätzen längs mindestens einer der Nähkoordinate,
- Winkelabweichung einer Erstreckung der Arbeitsstruktur-Datensätzen relativ zu den Referenzstruktur-Datensätzen längs einer Koordinate längs einer Linienverbindung eines Startpunktes und eines Endpunktes des jeweiligen Datensatzes und
- Größenunterschied einer Erstreckung der Arbeitsstruktur-Datensätzen relativ zu den Referenzstruktur-Datensätzen längs einer Koordinate längs einer Linienverbindung eines Startpunktes und eines Endpunktes des jeweiligen Datensatzes,

3. Verfahren nach einem der Ansprüche 1 und 2, **dadurch gekennzeichnet, dass** das Nähgut in einen Nähgutrahmen eingelegt wird, wobei die Referenzpositionen und die Arbeitspositionen bei eingelegtem Nähgut erfasst werden.

4. Nähvorrichtung (1), eingerichtet zur Abarbeitung des Verfahrens nach einem der Ansprüche 1 bis 3
- mit einer Nähmaschine,
- mit einem Nähgutrahmen (8),
- mit einem Kamerasystem (9) und
- mit einer programmierbaren Steuerung (12), die mit der Nähmaschine und dem Kamerasystem in Signalverbindung steht.

## Claims

1. Method for controlling the position of a seam contour relative to structures of a sewing material, comprising the following steps:
- recording of reference positions of the sewing material structures by means of a reference sewing material having such structures, wherein the sewing material structures are perforations or patterns or coloured patterns, in particular an irregular pattern, in the sewing material, which are applied to a closely tolerated, optimized material, wherein a reference image of the reference sewing material is generated by a camera system (9) and the reference image is then loaded into the camera system and the recognition of the sewing material structures is started,
- generation of reference structure data sets for a sewing programme based on the recorded reference positions of the sewing material structures,
- after generating the reference structure data sets: sewing of a working sewing material (16) with the sewing programme,
- wherein the following steps for preparing the sewing programme are carried out to prior to the sewing of the working sewing material:
-- recording of working positions of sewing material structures of the working sewing material (16), which correspond to the sewing material structures of the reference sewing material, wherein possible irregularities may be present, and wherein a working image of the unsewn working sewing material (16) is generated by the camera system (9),
-- generating working structure data sets on the basis of the recorded working positions of sewing material structures,
-- comparing the working positions with the reference positions by comparing the reference structure data sets with the working structure data sets,
-- adaptation of parameter data of the sewing programme on the basis of the deviations between the reference structure data sets and the working structure data sets recorded upon the comparison, wherein the adaptation of the sewing programme takes place via the camera system (9), wherein the camera system changes the sewing programme by manipulating the parameter values in the sewing programme, and
- sewing the working sewing material with the adapted sewing programme.

2. Method according to claim 1, **characterized in that** at least one deviation between the reference structure data sets and the working structure data sets from the following group is taken into account
- displacement of the working sewing material relative to the reference sewing material along a first sewing coordinate,
- displacement of the working sewing material relative to the reference sewing material along a second sewing coordinate, which is perpendicular to the first sewing coordinate,
- size difference of the working structure data sets relative to the reference structure data sets along at least one of the sewing coordinates,
- angular deviation of an extension of the working structure data sets relative to the reference structure data sets along a coordinate along a line connection of a start point and an end point of the respective data set, and
- size difference of an extension of the working structure data sets relative to the reference structure data sets along a coordinate along a line connection of a start point and an end point of the respective record,

3. Method according to one of claims 1 and 2, **characterized in that** the sewing material is inserted into a sewing material frame, wherein the reference positions and the working positions are recorded using the inserted sewing material.

4. Sewing device (1), construed for carrying out the method according to one of the claims 1 to 3
- with a sewing machine,
- with a sewing material frame (8),
- with a camera system (9) and
- with a programmable control unit (12), which is in signal communication with the sewing machine and the camera system.

## Revendications

1. Procédé de régulation de la position d'une couture par rapport à des structures d'un article à coudre, comprenant les étapes suivantes :
- détection de positions de référence des structures de l'article à coudre à l'aide d'un article à coudre de référence présentant ces structures, les structures de l'article à coudre étant des perforations ou des dessins ou des motifs colorés, en particulier un motif irrégulier, dans l'article à coudre, qui sont appliqués sur un matériau optimisé à tolérances étroites, une image de référence de l'article à coudre de référence étant produite par un système de caméra (9) et l'image de référence étant ensuite chargée dans le système de caméra et la reconnaissance des structures de l'article à coudre étant lancée,
- génération de jeux de données de structures de référence pour un programme de couture à l'aide des positions de référence saisies des structures de l'article à coudre,
- après la génération des jeux de données des structures de référence : couture d'un ouvrage à coudre (16) à l'aide du programme de couture,
- les étapes suivantes étant exécutées pour la préparation du programme de couture avant la couture de l'ouvrage à coudre :
-- la détection de positions de travail de structures de l'ouvrage à coudre (16) qui correspondent aux structures de l'article à coudre de référence, des irrégularités éventuelles pouvant être présentes, et une image de travail de l'ouvrage à coudre (16) non cousu étant produite par le système de caméra (9),
-- génération de jeux de données de structures de travail à partir des positions de travail saisies des structures de l'article à coudre,
-- comparaison des positions de travail avec les positions de référence sur la base d'une comparaison entre les jeux de données des structures de référence et les jeux de données des structures de travail,
-- l'adaptation de données de paramètres du programme de couture à l'aide des écarts détectés lors de la comparaison entre les jeux de données des structures de référence et les jeux de données des structures de travail, l'adaptation du programme de couture étant effectuée par l'intermédiaire du système de caméra (9), le système de caméra modifiant le programme de couture en manipulant les valeurs de paramètres dans le programme de couture, et
- couture de l'ouvrage à coudre à l'aide du programme de couture adapté.

2. Procédé selon la revendication 1, **caractérisé en ce qu'**au moins un écart entre les jeux de données des structures de référence et les jeux de données des structures de travail est pris en compte parmi le groupe suivant
- déplacement de l'ouvrage à coudre par rapport à l'article à coudre de référence le long d'une première coordonnée de couture,
- déplacement de l'ouvrage à coudre par rapport à l'article à coudre de référence le long d'une deuxième coordonnée de couture qui est perpendiculaire à la première coordonnée de couture,
- différence de taille des jeux de données des structures de travail par rapport aux jeux de données des structures de référence le long d'au moins une des coordonnées de couture,
- écart angulaire d'une extension des jeux de données des structures de travail par rapport aux jeux de données des structures de référence le long d'une coordonnée le long d'une ligne reliant un point de départ et un point d'arrivée du jeu de données respectif, et
- différence de taille d'une extension des jeux de données des structures de travail par rapport aux jeux de données des structures de référence le long d'une coordonnée le long d'une ligne reliant un point de départ et un point d'arrivée du jeu de données respectif,

3. Procédé selon l'une quelconque des revendications 1 et 2, **caractérisé en ce que** l'article à coudre est placé dans un cadre pour article à coudre, les positions de référence et les positions de travail étant détectées lorsque l'article à coudre est placé.

4. Dispositif de couture (1), agencé pour mettre en oeuvre le procédé selon l'une quelconque des revendications 1 à 3
- avec une machine à coudre,
- avec un cadre pour article à coudre (8),
- avec un système de caméra (9) et
- avec une commande programmable (12) qui est en liaison de signalisation avec la machine à coudre et le système de caméra.
